# EUROPÄISCHE PATENTANMELDUNG

(11) **EP 1 044 727 A2**
(43) Veröffentlichungstag der Anmeldung: **18.10.2000**
(21) Anmeldenummer: 00103372.9
(22) Anmeldetag: 23.02.2000
(51) Int. Cl.: B05C 17/01, B01F 13/00, B05C 17/005

(54) **Handgerät zum Mischen und Ausbringen einer viskosen Flüssigkeit**

(30) Priorität: 14.04.1999 DE 19916887
(71) Anmelder: Zwingenberger, Arthur, 6006 Luzern (CH)
(72) Erfinder: Zwingenberger, Arthur, 6006 Luzern (CH)
(74) Vertreter: Borchert, Uwe Rudolf, Dipl.-Ing.

(57) **Zusammenfassung**

Die Erfindung betrifft ein Handgerät 10 zum Mischen und Ausbringen einer viskosen, zumindest aus zwei Komponenten bestehenden Flüssigkeit mittels mindestens zweier Kolben 44, die in einem eine Handhabe 26 aufweisenden Gehäuse 12 gelagert sind und längs einer Achse 48 auf die die viskose Flüssigkeit enthaltenden Behältnisse 20 eines Einsatzes 18 einwirken, der in eine Aufnahme 42 eingebracht ist und zumindest für jede Komponente der viskosen Flüssigkeit ein Behältnis 20 umfaßt, das jeweils über Leitungen mit einer Mischeinrichtung, wie einem statischen Mischer 24, verbunden ist, wobei die Aufnahme 42 Teil eines Gehäuseaufsatzes 14 ist und das Gehäuse 12 und der Gehäuseaufsatz 14 jeweils eine Baueinheit bilden, die lösbar miteinander verbunden sind. Die Erfindung zeichnet sich dadurch aus, daß die Aufnahme 42 in dem Gehäuseaufsatz 14 so drehbar gelagert ist, daß diese gegenüber der Achse 48 um eine Schwenkachse zwischen einer Betriebsstellung, in der die Aufnahme 42 mit der Achse 48 ausgerichtet ist, und einer Offenstellung, in der der Einsatz 18 aus der Aufnahme 42 entfernt bzw. in die Aufnahme 42 eingebracht werden kann, verschwenkbar ist, daß in dem Gehäuseaufsatz 14 eine lösbare Arretiereinrichtung 46 angeordnet ist, die die Aufnahme 42 in der Betriebsstellung festhält, und daß Mittel 14 vorgesehen sind, die in der Betriebsstellung den Einsatz 18 in der Aufnahme 42 halten.

## Beschreibung

Die Erfindung betrifft ein Handgerät zum Mischen und Ausbringen einer viskosen Flüssigkeit gemäß der im Oberbegriff des Patentanspruches 1 angegebenen Art.

Ein derartiges Handgerät ist beispielsweise aus der EP 0 252 401 B1 bekannt und weist einen pistolenartigen Grundaufbau auf. Das Gehäuse umfaßt einen Griff sowie einen Handhebel über den ein im Gehäuse geführter und verfahrbar gelagerter Doppelkolben angetrieben wird. Zum Mischen zweier Komponenten zu einer viskosen Flüssigkeit und Ausbringen dieser Flüssigkeit wird der Kolben in eine Aufnahme in einem lösbar mit dem Gehäuse verbundenen Gehäuseaufsatz verfahren, in der die Behältnisse der Komponenten in Form einer Doppelkartusche angeordnet sind. Auf eine Kartusche wirkt dabei jeweils ein Kolben ein. Die Kartuschen sind über Leitungen mit einer Mischeinrichtung, insbesondere einem statischen Mischer, zur Vermischung der beiden Komponenten aus der Doppelkartusche als eine Baueinheit miteinander verbunden und bilden einen Einsatz. Die Aufnahme ist Teil des Gehäuseaufsatzes, der vom Gehäuse entfernt werden kann, um den Einsatz mit den leeren Kartuschen herauszunehmen und einen neuen Einsatz mit vollen Kartuschen einzusetzen.

Ein Auswechseln durch Herausnahme des ganzen Gehäuseaufsatzes nach dem Betrieb des Handgerätes ist äußerst aufwendig. Dies ist insbesondere von Nachteil, wenn das Handgerät im dentalen Bereich zum Ausbringen und Mischen einer Mehrkomponentenmasse für zahnärztliche Zwecke verwendet wird. Hierbei muß nämlich jedes Mal der gebrauchte Einsatz in die Hand genommen werden, wodurch es zu Verschmutzung der Hände oder der Handschuhe kommen kann. Das Handling des Einsatzes und seiner Kartuschen, insbesondere das Ein- und Ausbringen in die Aufnahme mit dem Lösen und Anbringen des Gehäuseaufsatzes an dem Gehäuse des Handgerätes, ist somit für den zahnärztlichen und zahntechnischen Bereich ungünstig.

Das bekannte Handgerät wird für Mehrweg-Einsätze verwendet. Mittlerweile wurden aber auch Einweg-Einsätze entwickelt, wie sie in der deutschen Patentanmeldung Nr. 197 45 614.6-27 offenbart sind.

Aufgrund dieser neuen Einweg-Einsätze besteht in der täglichen Praxis, insbesondere bei Zahnärzten, zusätzlicher Bedarf an einfach zu handhabenden Handgeräten, die die Herstellung der Abdruckmasse für zahnärztliche Zwecke im jeweils gewünschten Volumen wesentlich erleichtem. Ein Verkleben der Finger oder zahntechnischen Geräte durch die einzelnen Komponenten beim Handling der Einweg-Einsätze ist dabei unerwünscht.

Der Erfindung liegt die Aufgabe zugrunde, ein Handgerät gemäß der im Oberbegriff des Patentanspruches 1 angegebenen Art derart weiterzubilden, daß unter Vermeidung der genannten Nachteile ein einfaches und schnelles Auswechseln der Einsätze gewährleistet wird. Zudem soll ein einfaches Nachrüsten bestehender Geräte mit Gehäuseaufsätzen nach der Erfindung ermöglicht werden.

Diese Aufgabe wird durch die kennzeichnenden Merkmale des Patentanspruches 1 in Verbindung mit seinen Oberbegriffsmerkmalen gelöst.

Weitere vorteilhafte Ausgestaltungen der Erfindung bilden die Gegenstände der Unteransprüche.

Der Erfindung liegt die Erkenntnis zugrunde, daß durch ein Herausschwenken der Aufnahme aus dem Betriebebereich ein Auswechseln des Einsatzes ermöglicht wird, ohne den Gehäuseaufsatz, der exakt mit der Achse der Kolben ausgerichtet sein muß, zu bewegen. Insbesondere durch Rastmittel kann die Aufnahme für den Betrieb des Handgeräts in der Betriebsstellung festgehalten werden, so daß die Kolben unbeeinträchtigt in die Aufnahme zum Ausbringen und Mischen der in den Behältnissen des Einsatzes angeordneten Komponenten der viskosen Flüssigkeit eingreifen können.

Nach der Erfindung ist daher die Aufnahme in dem Gehäuseaufsatz so drehbar gelagert, daß diese gegenüber der Achse um eine Schwenkachse zwischen einer Betriebsstellung, in der die Aufnahme mit der Achse ausgerichtet ist, und einer Offenstellung, in der der Einsatz aus der Aufnahme entfernt bzw. in die Aufnahme eingebracht werden kann, verschwenkbar ist. Zudem ist in dem Gehäuseaufsatz eine lösbare Arretiereinrichtung angeordnet, die die Aufnahme in der Betriebsstellung festhält. Desweiteren sind Mittel vorgesehen, die in der Betriebsstellung den Einsatz in der Aufnahme halten, und dadurch ein Bewegen des Einsatzes relativ zur Aufnahme verhindern.

Hierdurch wird auf einfache Weise ein schnelles Auswechseln des Einsatzes durch Abklappen der Aufnahme ermöglicht. Der Einsatz kann durch selbsttätiges Herausgleiten aus der Aufnahme entfernt werden. Ein Berühren des unter Umständen mit der viskosen Flüssigkeit verschmutzten Bereiches der Ausbringöffnung nach der Mischeinrichtung ist nicht mehr notwendig.

Um eine definierte Anordnung des Behältnisses in der Aufnahme zu gewährleisten, ist die Aufnahme an die Form des Einsatzes angepaßt.

Gemäß einer Ausführungsform der Erfindung ist die Aufnahme in ihrer Offenstellung, insbesondere über Rastmittel fixierbar, wodurch verhindert wird, daß sich während des Entfernens des Einsatzes die Aufnahme bewegt, und dadurch das Auswechseln des Einsatzes beeinträchtigt wird.

Vorzugsweise ist die Aufnahme über einen vorbestimmten Winkel kleiner als 90°, insbesondere bis zu 15° zur Achse, aus der Betriebsstellung in die Offenstellung verschwenkbar. Dieser Bereich ist ausreichend, um ein selbsttätiges Herausgleiten des Einsatzes aus der Aufnahme zu erreichen und zudem die Voraussetzungen für einen kleinbauenden Gehäuseaufsatz zu schaffen.

Dies kann weiterhin dadurch optimiert werden, indem gemäß einer weiteren Ausführungsform der Erfindung die Schwenkachse im Bereich des dem Kolben zugewandten Endes der Aufnahme angeordnet ist.

Gemäß einer Ausführungsform der Erfindung umgreift in der Betriebsstellung der Gehäuseaufsatz das dem Kolben entfernt gelegene Ende der Aufnahme sowie zumindest einen Teil des Einsatzes derart, daß dieser in der Aufnahme festgelegt und in der Offenstellung freigegeben ist. Durch Verschwenken der Aufnahme wird somit der Einsatz in der Aufnahme für den Betrieb fixiert - Betriebsstellung - sowie für das Auswechseln freigegeben - Offenstellung . Dieser Teil des Gehäuseaufsatzes ist somit auf einfache Weise das Mittel, um den Einsatz in der Betriebsstellung in der Aufnahme zu halten.

Um eine möglichst spielfreie Lagerung des Einsatzes in der Aufnahme in der Betriebstellung zu erreichen, ist der den Einsatz in der Betriebsstellung umgreifende Teil des Gehäuseaufsatzes zumindest bereichsweise an den Einsatz angepaßt.

Vorzugsweise besteht die Aufnahme aus Metall und schützt dadurch die Behältnisse des Einsatzes, wie Folienbeutel, in der Aufnahme vor ungewollten mechanischen Einwirkungen von außen.

Weitere Vorteile und Merkmale bildet die folgende Beschreibung einer Ausführungsform der Erfindung in Zusammenhang mit der Zeichnung. Es zeigen:
- Fig. 1: eine perspektivische Explosionsdarstellung der einzelnen Teile des Handgerätes nach der Erfindung mit einem Einwegeinsatz für die Komponenten;
- Fig. 2: eine perspektivische Darstellung des Gehäuseaufsatzes des Handgerätes von Fig. 1 in der Betriebsstellung;
- Fig. 3: eine Längsschnittansicht durch den Gehäuseaufsatz von Fig. 2;
- Fig. 4: eine vergrößerte Seitenansicht der Aufnahme von Fig. 3;
- Fig. 5: eine Längsschnittansicht der Aufnahme von Fig. 4;
- Fig. 6: eine Querschnittsansicht der Aufnahme von Fig. 5;

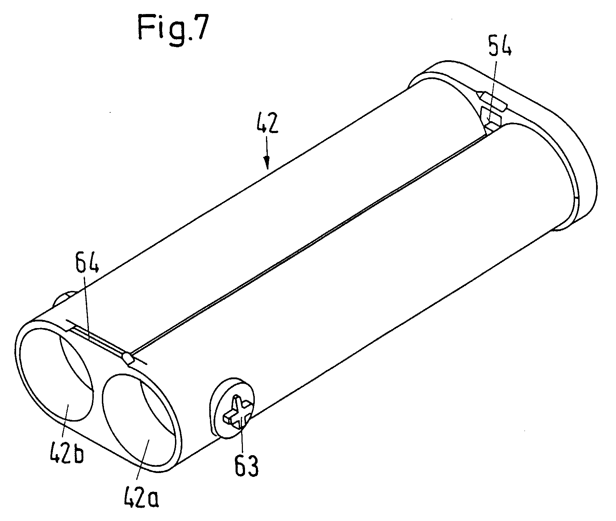

- Fig. 7: eine perspektivische Ansicht der Aufnahme;
- Fig. 8: eine perspektivische Ansicht des oberen Teils der Arretiereinrichtung; und
- Fig. 9: eine perspektivische Ansicht des anderen Teils der Arretiereinrichtung.

In den Figuren ist ein dentales Handgerät 10 für Abdruckmassen dargestellt, das aus einem Grundgehäuse 12, einem Gehäuseaufsatz 14 sowie einem Doppelkolben 16 besteht. In den Gehäuseaufsatz 14 ist ein Einwegeinsatz 18 einbringbar, der aus zwei mit unterschiedlichen Komponenten der Abdruckmasse für zahnärztliche Zwecke gefüllten Folienbeuteln 20, einem Kopfstück 22 und einem statischen Mischer 24 besteht, wobei das Kopfstück 22 Leitungen umfaßt, die eine Strömungsverbindung zwischen den Folienbeuteln 20 und dem statischen Mischer 24 herstellen.

Das Grundgehäuse 14 ist pistolenartig aufgebaut und umfaßt einen Handgriff 26 sowie einen Handhebel 28. Im Gehäusekopf 30 des Grundgehäuses 12 sind Führungen 32 für den Doppelkolben 16 vorgesehen. In den Führungen 32 ist der Doppelkolben 16 verfahrbar gelagert.

Über den Handhebel 28 wird der in die Führungen 32 eingebrachte Doppelkolben 16 in seine Wirkrichtung in Richtung nach vorne in den Gehäuseaufsatz 14 mit Drücken des Handhebeis 28 angetrieben.

Der Gehäusekopf 30 ist stirnseitig mit einer Nut 34 versehen, in die der hintere Teil des Gehäuseaufsatzes 14 eingreift. Hierfür weist der Gehäuseaufsatz 14 eine Führungswandung 36 auf, die an die Nut 34 angepaßt ist.

Der Gehäuseaufsatz 14 ist haubenartig ausgebildet. Zwischen den zwei Seitenwandungen 38 und 40 des Gehäuseaufsatzes 14 ist eine zwei zylindrische, an die gefüllten Folienbeutel 20 angepaßte Kammern 42a, 42b aufweisende Aufnahme 42 verschwenkbar gelagert.

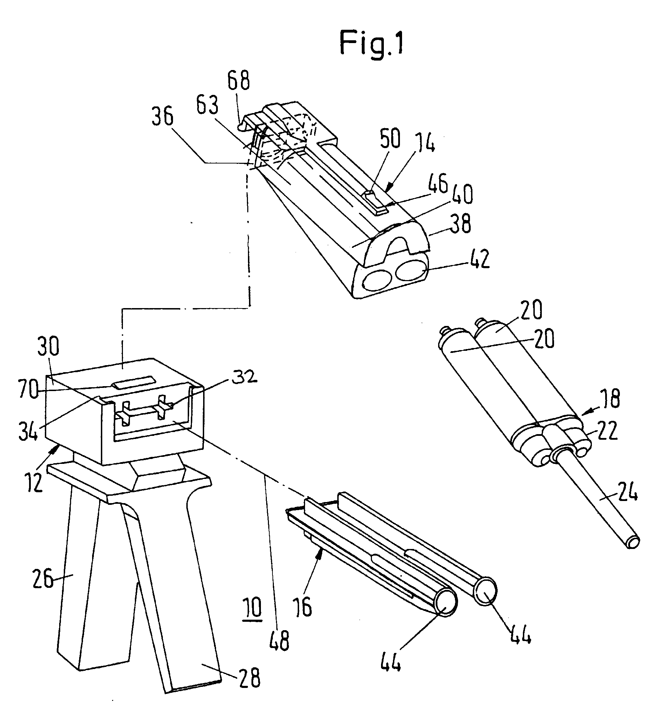

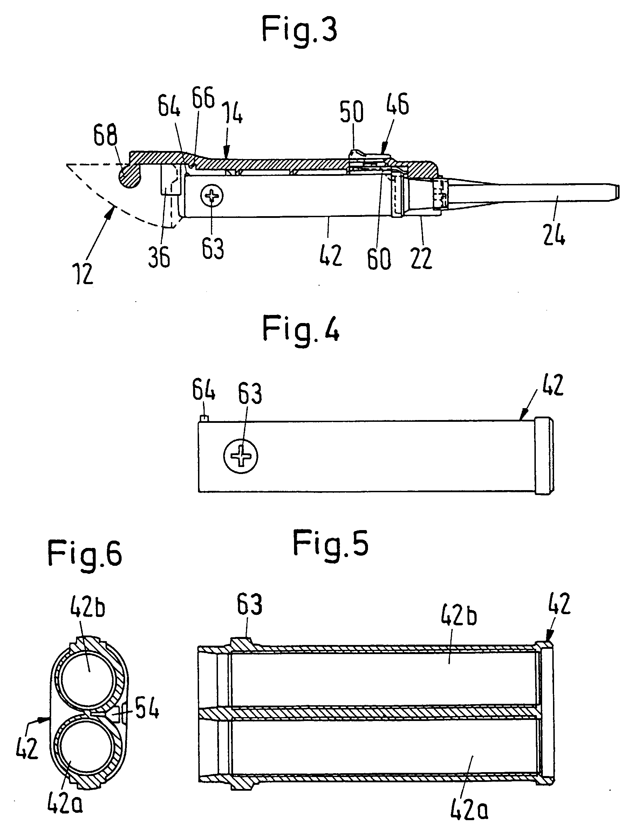

Die Aufnahme 42 ist um eine quer verlaufende Schwenkachse im Bereich ihres hinteren Endes benachbart der Führungswandung 36 aus einer Betriebsstellung, siehe Fig. 3, in eine Offenstellung, siehe Fig. 1, verschwenkbar, wobei der Schwenkwinkel kleiner als 90° ist, insbesondere aber bis zu 15° beträgt.

Das vordere Ende der Aufnahme 42 ist zum Ein- und Ausbringen der Folienbeutel 20 des Einsatzes 18 offen und im Endbereich an das Kopfstück 22 des Einwegeinsatzes 18 angepaßt. Das hintere Ende der Aufnahme 42 ist zum Einfahren der beiden Kolben 44 des Doppelkolbens 16 ebenfalls offen ausgebildet. Die Kolben 44 sind an die Kammern 42a und 42b angepaßt.

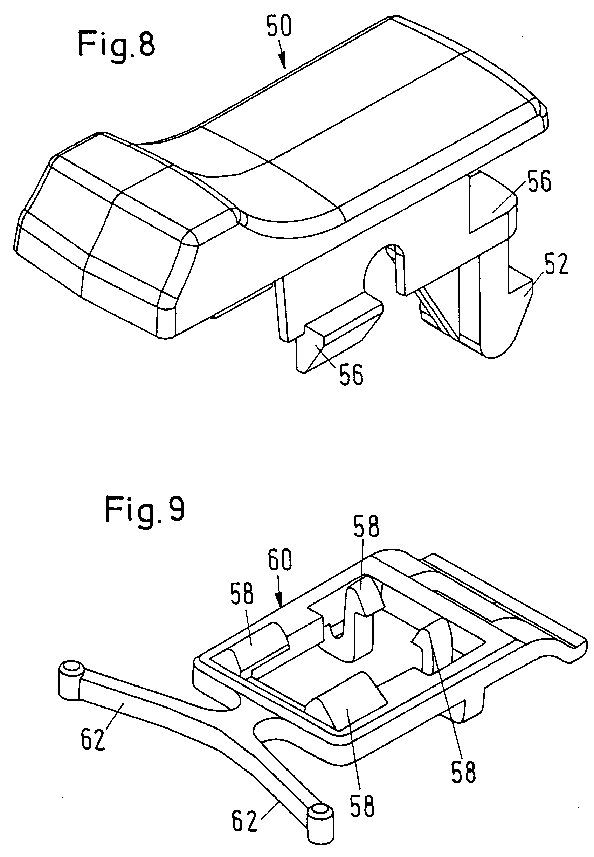

In der Betriebsstellung wird die Aufnahme 42 durch eine Arretiereinrichtung 46 festgehalten. Die Arretiereinrichtung 46 ist dabei zweiteilig ausgeführt, wie dies im einzelnen in den Fig. 8 und 9 dargestellt ist.

Die Arretiereinrichtung 46 besteht aus einem oberen Teil, nämlich einen längs einer Achse 48 verschiebbaren Knopf 50, der mit einem Haltemittel 52 versehen ist, das in eine Ausnehmung 54 am oberen Endbereich der Aufnahme 42 eingreift. Der Knopf 50 greift über einander zugeordnete Rast- und Führungsmittel 56 und 58 in ein Lagerteil 60 ein, das unterhalb des Gehäuseaufsatzes 14 in einer zugeordneten Ausnehmung angeordnet ist.

Der Knopf 50 ist, wie oben erwähnt, entlang der Achse 48 auf dem Gehäuseaufsatz 14 verschiebbar, so daß das Haltemittel 52 in die Ausnehmung 54 der Aufnahme 42 ein- und ausgebracht werden kann. Das Lagerteil 60 ist durch zwei Federarme 62 nach vorne vorgespannt. Über die Rast- und Führungsmittel 58 des Lagerteils 60 ist daher auch der Knopf 50 nach vorne vorgespannt. Gegen die Vorspannung kann der Knopf 50 und somit das Haltemittel 52 aus der Ausnehmung 54 verfahren werden.

Auf der unteren Seite des Haltemittels 52 ist dieses abgeschrägt, so daß mit Verschwenken der Aufnahme 42 in die Betriebsstellung das Haltemittel 52 einfach in die Ausnehmung 54 einschnappt.

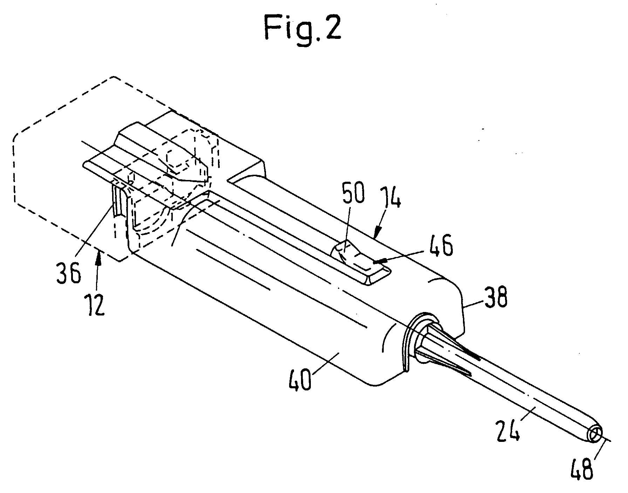

Wie deutlich der Fig. 2 zu entnehmen ist, umgreift der Gehäuseaufsatz 14 teilweise den in die Aufnahme 42 eingebrachten Einwegeinsatz 18 und zwar im Bereich des der Düse des statischen Mischers 24 entfernt gelegenen Endbereiches. In diesem Teil des Gehäuseaufsatzes 14 ist dieser an den Einwegeinsatz 18 angepaßt, wodurch eine spielfreie Lagerung des Einwegeinsatzes 18 in der Betriebsstellung der Aufnahme 42 gewährleistet wird.

Entlang der Achse 48 werden zum Mischen und Ausbringen der dentalen Abdruckmasse die Kolben 44 des Doppelkolbens 16 in die zugeordneten Zylinderkammern 42a und 42b der Aufnahme 42 verfahren, indem der Handhebel 28 abwechselnd gedrückt und wieder gelöst wird. Mit zunehmendem Druck werden die Komponenten der Folienbeutel 20 über die Leitungen im Kopfstück 22 in den statischen Mischer 24 gedrückt, dort vermischt und über die Düse des statischen Mischers 24 in den Behandlungsbereich ausgebracht.

Nach Gebrauch werden die Kolben 44 in bekannter Weise in ihre Ausgangsposition außerhalb des Gehäuseaufsatzes 14 verfahren. Durch Zurückziehen des Knopfes 50 werden die Haltemittel 42 aus der Ausnehmung 54 der Aufnahme 42 verfahren und diese somit freigegeben. Durch den nunmehr vorne liegenden Schwerpunkt in Folge der zusammengedrückten Folienbeutel 20 sowie das in dem hinteren Bereich angeordnete Lager 63 der Aufnahme 42 klappt diese selbsttätig nach unten, bis im hinteren Bereich ein Vorsprung 64 über eine Rast 66 geführt ist. In dieser Position - Offenstellung - ist die Aufnahme durch den Vorsprung 64 und die Rast 66 fixiert und der Einwegeinsatz 18 gleitet selbsttätig aus der Aufnahme 42 heraus.

Auf einfache Weise kann nunmehr für einen neuen Behandlungsfall ein neuer Einwegeinsatz 18 in die Aufnahme 42 eingebracht werden. Mit Verschwenken der Aufnahme 42 wird der Vorsprung 64 zurück über die Rast 66 geführt. Die Aufnahme 42 wird dann wieder in die Betriebsstellung verschwenkt bis das Haltemittel 52 wieder in die Ausnehmung 54 der Aufnahme 42 einrastet.

Wie im einzelnen der Fig. 3 zu entnehmen ist, weist der Gehäuseaufsatz 14 an seinem einen Ende bei der Führungswand 36 ein Rastmittel 68 auf, das in eine zugeordnete Ausnehmung 70 im Grundgehäuse 12 mit Aufsetzen des Gehäuseaufsatzes 14 auf das Grundgehäuse 12 einschnappt und den Gehäuseaufsatz 14 auf dem Grundgehäuse 12 lösbar fixiert.

Die Erfindung zeichnet sich durch die einfache und schnelle Möglichkeit des Auswechselns des Einwegeinsatzes 18 sowie durch die Nachrüstbarkeit bekannter Geräte mit dem Gehäuseaufsatz 14 des Handgeräts 10 nach der Erfindung aus. Die Bedienung wird durch die Rastmittel stark vereinfacht, die mit geringem Kraftaufwand wieder gelöst werden können.

### Bezugszeichenliste

- 10: Handgerät
- 12: Grundgehäuse
- 14: Gehäuseaufsatz
- 16: Doppelkolben
- 18: Einwegeinsatz
- 20: Folienbeutel
- 22: Kopfstück
- 24: statischer Mischer
- 26: Handgriff
- 28: Handhebel
- 30: Gehäusekopf
- 32: Führung
- 34: Nut
- 36: Führungswandung
- 38: Seitenwandung
- 40: Seitenwandung
- 42: Aufnahme
- 42a: zylindrische Kammer - links
- 42b: zylindrische Kammer - rechts
- 44: Kolben
- 46: Arretiereinrichtung
- 48: Achse
- 50: Knopf
- 52: Haltemittel
- 54: Ausnehmung
- 56: Rast- und Führungsmittel des Knopfes
- 58: Rast- und Führungsmittel des Lagerteils
- 60: Lagerteil
- 62: Federarme
- 63: Lager
- 64: Vorsprung
- 66: Rast
- 68: Rastmittel
- 70: Ausnehmung

## Patentansprüche

1. Handgerät (10) zum Mischen und Ausbringen einer viskosen, zumindest aus zwei Komponenten bestehenden Flüssigkeit mittels mindestens zweier Kolben (44), die in einem eine Handhabe (26) aufweisenden Gehäuse (12) gelagert sind und längs einer Achse (48) auf die die viskose Flüssigkeit enthaltenden Behältnisse (20) eines Einsatzes (18) einwirken, der in eine Aufnahme (42) eingebracht ist und zumindest für jede Komponente der viskosen Flüssigkeit ein Behältnis (20) umfaßt, das jeweils über Leitungen mit einer Mischeinrichtung, wie einem statischen Mischer (24), verbunden ist, wobei die Aufnahme (42) Teil eines Gehäuseaufsatzes (14) ist und das Gehäuse (12) und der Gehäuseaufsatz (14) jeweils eine Baueinheit bilden, die lösbar miteinander verbunden sind, **dadurch gekennzeichnet**, daß die Aufnahme (42) in dem Gehäuseaufsatz (14) so drehbar gelagert ist, daß diese gegenüber der Achse (48) um eine Schwenkachse zwischen einer Betriebsstellung, in der die Aufnahme (42) mit der Achse (48) ausgerichtet ist, und einer Offenstellung, in der der Einsatz (18) aus der Aufnahme (42) entfernt bzw. in die Aufnahme (42) eingebracht werden kann, verschwenkbar ist, daß in dem Gehäuseaufsatz (14) eine lösbare Arretiereinrichtung (46) angeordnet ist, die die Aufnahme (42) in der Betriebsstellung festhält, und daß Mittel (14) vorgesehen sind, die in der Betriebsstellung den Einsatz (18) in der Aufnahme (42) halten.

2. Handgerät nach Anspruch 1, **dadurch gekennzeichnet**, daß die Aufnahme (42) an die Form des Einsatzes (18) angepaßt ist.

3. Handgerät nach Anspruch 1 oder 2, **dadurch gekennzeichnet**, daß die Aufnahme (42) in ihrer Offenstellung, insbesondere über Rastmittel (64, 66), fixierbar ist.

4. Handgerät nach einem der vorangehenden Ansprüche, **dadurch gekennzeichnet**, daß die Aufnahme (42) über einen vorbestimmten Winkel kleiner als 90°, insbesondere bis 15° zur Achse (48), aus der Betriebsstellung in die Offenstellung verschwenkbar ist.

5. Handgerät nach einem der vorangehenden Ansprüche, **dadurch gekennzeichnet**, daß die Schwenkachse im Bereich des den Kolben (44) zugewandten Endes der Aufnahme (42) angeordnet ist.

6. Handgerät nach einem der vorangehenden Ansprüche, **dadurch gekennzeichnet**, daß in der Betriebsstellung der Gehäuseaufsatz (14) das dem Kolben (44) entfernt gelegene Ende der Aufnahme (42) sowie einen Teil des Einsatzes (18) so umgreift, daß dieser in der Aufnahme (42) festgelegt und in der Offenstellung freigegeben ist.

7. Handgerät nach Anspruch 6, **dadurch gekennzeichnet**, daß der den Einsatz (18) in der Betriebsstellung umgreifende Teil des Gehäuseaufsatzes (14) zumindest bereichsweise an den Einsatz (18) angepaßt ist.

8. Handgerät nach einem der vorangehenden Ansprüche, **gekennzeichnet durch** eine Aufnahme (42) aus Metall.

9. Handgerät nach einem der vorangehenden Ansprüche, **dadurch gekennzeichnet**, daß der Gehäuseaufsatz (14) in dem Gehäuse (12), insbesondere über Rastmittel (64, 66), fixierbar ist.

10. Handgerät nach einem der vorangehenden Ansprüche, **dadurch gekennzeichnet**, daß der Einsatz (18) eine unlösbar miteinander verbundene Baueinheit bildet.

11. Handgerät nach einem der vorangehenden Ansprüche, **gekennzeichnet durch** eine Verwendung im dentalen Bereich.
